# FASCICULE DE BREVET EUROPEEN

(11) **EP 2 300 315 B1**
(45) Date de publication et mention de la délivrance du brevet: **23.10.2013**
(21) Numéro de dépôt: 09784418.7
(22) Date de dépôt: 22.06.2009
(51) Int. Cl.: B64C 1/14, B29C 70/68, B29C 70/30

(54) **PANNEAU DE FUSELAGE D'AERONEF RENFORCE ET PROCEDE DE FABRICATION**
VERSTÄRKTE FLUGZEUGRUMPFPLATTE UND HERSTELLUNGSVERFAHREN
REINFORCED AIRCRAFT FUSELAGE PANEL AND METHOD OF MANUFACTURE

(30) Priorité: 26.06.2008 FR 0854290
(43) Date de publication de la demande: 30.03.2011
(73) Titulaire: Airbus Operations, 31060 Toulouse (FR)
(72) Inventeur: HARASSE, Olivier, 31700 Blagnac (FR); PARREAUX-EY, François, 31600 Muret (FR)
(74) Mandataire: Ilgart, Jean-Christophe
(86) Numéro de dépôt international: PCT/FR2009/051187
(87) Numéro de publication internationale: WO 2010/004159

(56) Documents cités:
- WO-A-01/58680
- NIU, M.C.Y: "Airframe Structural Design" février 2002 (2002-02), HONG KONG CONMILIT PRESS LTD. , HONG KONG , XP002512107 ISBN 962-7128-09-0; page 187; figure 6.5.1

## Description

### DOMAINE TECHNIQUE

La présente invention se rapporte d'une façon générale au domaine des fuselages d'aéronefs comportant un revêtement extérieur en matériau composite fibreux. et en particulier au domaine des éléments de renfort en matériau composite pour revêtement extérieur.

### ETAT DE LA TECHNIQUE ANTERIEURE

Classiquement, un fuselage d'aéronef comprend des panneaux montés et fixés autour d'une structure interne de manière à former, une fois assemblés, un revêtement extérieur aérodynamique.

La structure interne est composée notamment de cadres de structure régulièrement répartis sur toute la longueur du fuselage et disposés de manière transversale à l'axe longitudinal du fuselage, et des lisses disposées de manière parallèle à l'axe longitudinal du fuselage.

Dans le but de diminuer au maximum la masse de l'aéronef et d'améliorer ainsi les performances de l'appareil, les constructeurs d'aéronefs cherchent à utiliser des matériaux plus légers que les matériaux métalliques habituellement utilisés, tout en préservant ou améliorant les caractéristiques mécaniques.

Le choix actuel dans le domaine aéronautique est de remplacer les éléments métalliques par des éléments en matériau composite comprenant un mélange de fibres et de résine. Cela concerne notamment les panneaux de fuselage du revêtement extérieur.

Les procédés classiques de fabrication d'un panneau de fuselage consistent globalement à mettre en oeuvre deux étapes successives, à savoir une étape de drapage suivie d'une étape de consolidation.

L'étape de drapage consiste à réaliser un empilement de nappes ou de tissus de fibres pré-imprégnées de résine, dans le but d'obtenir une pluralité de couches ou plis superposés. L'étape de consolidation de l'empilement consiste quant à elle à obtenir le panneau en compactant l'ensemble constitué par les plis de fibres pré-imprégnées, par l'application d'une pression ou d'une dépression. D'autre part, cette étape de consolidation de l'empilement s'effectue par cuisson de ce dernier, par exemple en étuve ou en autoclave, afin de polymériser la résine pré-imprégnée sur les fibres, pour obtenir ainsi un élément final compact et d'un seul tenant.

Le fuselage d'un aéronef est habituellement soumis à des efforts mécaniques très importants, du fait par exemple du poids de l'aéronef ou de l'action de la gouverne de direction. Ces efforts peuvent engendrer des contraintes de flexion et/ou de torsion.

La structure interne du fuselage a pour but de procurer la résistance mécanique nécessaire au fuselage. Ainsi, les cadres assurent le raidissement circonférentiel du fuselage, c'est-à-dire suivant la périphérie du fuselage, et les lisses assurent le raidissement longitudinal.

Cependant, le revêtement extérieur de fuselage d'aéronef comporte le plus souvent un certain nombre d'ouvertures, par exemple à l'emplacement des portes permettant le passage de passagers, qui constituent des zones de concentration de contraintes.
La figure 1 des dessins annexés représente en perspective les parties avant et centrale d'un aéronef 10. Le fuselage 20 comporte une pluralité d'ouvertures, par exemple pour les portes 21 à l'avant du fuselage 20 et les portes 22 au centre du fuselage 20.
La figure 2 est une vue de face d'un panneau 30 de fuselage comportant une ouverture 40, ledit panneau 30 étant monté fixement sur des cadres de structure 24.

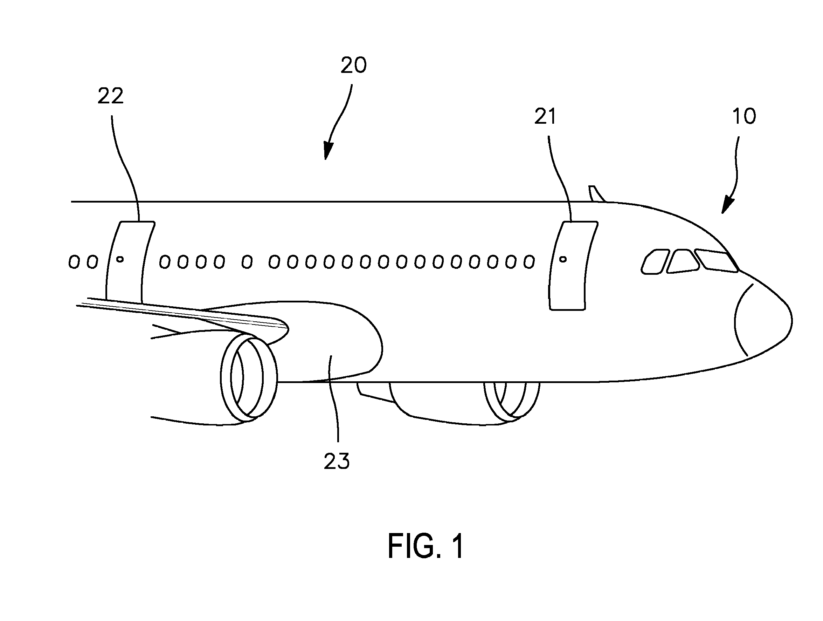

Certaines ouvertures sont soumises à des contraintes localisées particulièrement élevées, comme par exemple les ouvertures correspondant aux portes passagers 22 situées au centre du fuselage 20 et à proximité de la partie d'attache 23 de la voilure (figure 1).

Ces ouvertures peuvent alors présenter des amorces de rupture du revêtement extérieur, ce qui constitue un risque inacceptable pour l'aéronef.

Les panneaux de fuselage sont donc habituellement renforcés au niveau des ouvertures, à l'aide d'un renfort local procurant la résistance mécanique exigée.

Le renfort local présente alors, d'une part, une épaisseur déterminée sur au moins une partie du contour de l'ouverture, et d'autre part, une surface suffisamment grande pour répartir correctement les contraintes.

Une solution consiste à prévoir un renfort intégré en matériau composite, réalisé à partir d'un empilement supplémentaire de plis disposé le long d'au moins une partie du contour de l'ouverture lors de l'opération de drapage.

Après l'étape de consolidation, on obtient un panneau renforcé par le renfort intégré. Ainsi, le panneau comporte une peau formée par le premier empilement de plis, et le renfort intégré formé par le second empilement de plis. Plus précisément, le premier empilement de plis est formé de deux empilements secondaires superposés l'un à l'autre, le second empilement de plis du renfort intégré étant intercalé entre les deux empilements secondaires de la peau.

On appelle ici portion de peau renforcée la portion de la peau comportant le renfort intégré.

L'épaisseur et la surface du renfort intégré sont alors déterminées de manière à procurer localement la résistance mécanique nécessaire du panneau de fuselage, évitant ainsi toute amorce de rupture au niveau de l'ouverture.

Cependant, il est connu qu'une variation brusque d'épaisseur d'une pièce en matériau composite conduit à des efforts de pelage. Le pelage se traduit par une désolidarisation des plis de fibres, ce qui, bien entendu, diminue la résistance de la pièce.

Pour minimiser ces efforts, le renfort intégré comporte classiquement un lâcher de plis, c'est-à-dire une disposition en biseau ou en étages ou gradins des plis formant le renfort intégré, pour obtenir ainsi une diminution sensiblement constante de l'épaisseur du renfort intégré. Les contraintes sont alors correctement réparties, ce qui permet d'éviter les efforts de pelage.

De plus, les règles de conception des pièces en matériau composite préconisent habituellement de réaliser le lâcher de plis avec une pente suffisamment faible, pour répartir au mieux les contraintes.

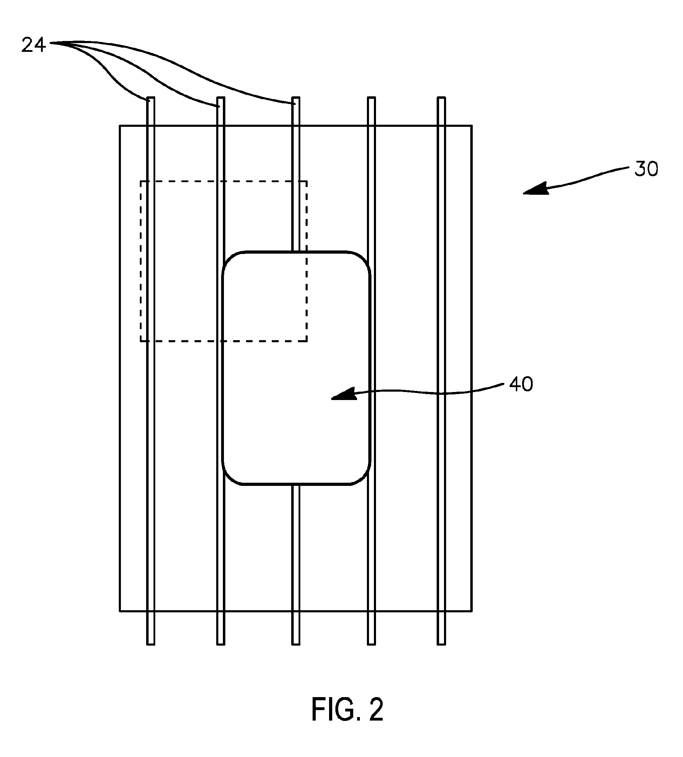

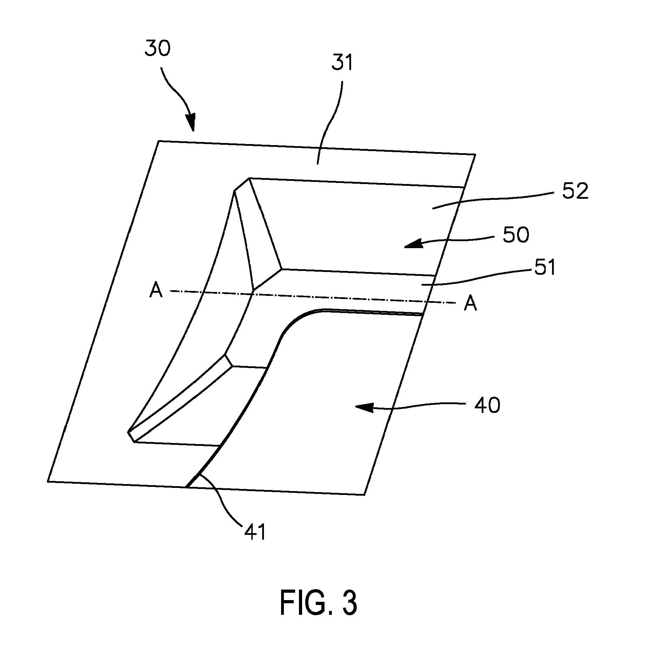

La figure 3, qui est une vue agrandie en perspective d'une partie de la figure 2, illustre un exemple de panneau 30 comportant une peau 31 dont une portion est renforcée par le renfort intégré 50. Le renfort intégré 50 comporte ici une première portion 51 d'épaisseur sensiblement constante, et une seconde portion 52 de lâcher de plis. La première portion 51 est disposée de manière à définir au moins une partie du contour 41 de l'ouverture 40 et la seconde portion 52 s'étend à partir de la première portion 51. Il est à noter que la première portion 51 peut ne pas être présente, la seconde portion 52 étant alors disposée de manière à définir au moins une partie du contour 41 de l'ouverture 40.

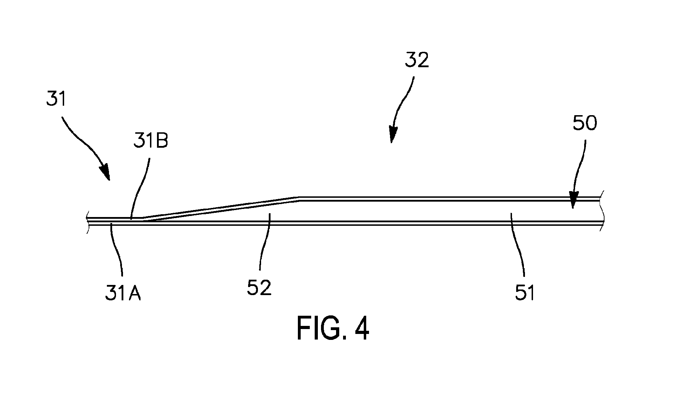

La figure 4 représente une vue en coupe de la peau 31 du panneau 30 comportant une portion de peau renforcée 32, selon l'axe A-A de la figure 3.

La peau 31 comprend deux empilements secondaires 31A et 31B, superposés l'un à l'autre. Un renfort intégré 50 est intercalé entre les deux empilements secondaires 31A et 31B de la peau 31. La portion de la peau 31 comprenant le renfort intégré 50 définit la portion de peau renforcée 32.

On comprend que la longueur d'étalement de la surface du lâcher de plis du renfort intégré dépend directement de l'épaisseur maximale dudit renfort et de la valeur de la pente dudit lâcher de plis.

Cependant, le respect à la fois d'une pente faible de lâcher de plis et de l'épaisseur locale nécessaire, qui peut être importante, conduit à une surface d'étalement du lâcher de plis particulièrement pénalisante en termes de masse et d'encombrement.

### EXPOSÉ DE L'INVENTION

L'invention a principalement pour objet un panneau de fuselage d'aéronef comportant une ouverture, ledit panneau étant renforcé sur au moins une partie du contour de ladite ouverture, dont la conception originale procure la résistance mécanique nécessaire et une bonne répartition des contraintes, tout en garantissant une économie de masse et un encombrement limité.

Le panneau de fuselage en matériau composite comporte une peau présentant une ouverture dont au moins une partie du contour est renforcée par un renfort intégré en matériau composite, définissant une portion de peau renforcée, ledit renfort intégré définissant au moins une partie du contour de ladite ouverture et comportant un lâcher de plis.

Selon l'invention, ledit panneau de fuselage comporte au moins un doubleur en matériau composite solidaire et superposé à ladite portion de peau renforcée, participant au moins partiellement à la définition du contour de l'ouverture, ledit panneau comportant en outre des organes de consolidation traversant chacun au moins en partie ledit doubleur et au moins en partie ladite portion de peau renforcée.

Ainsi, le panneau de fuselage présente une portion de peau renforcée au niveau de l'ouverture, d'une part par le renfort intégré, et d'autre part par le doubleur, procurant la résistance mécanique nécessaire et une bonne répartition des contraintes, tout en garantissant une économie de masse et un encombrement limité.

En effet, l'épaisseur cumulée du renfort intégré et du doubleur solidaire de la portion de peau renforcée procure la résistance mécanique locale voulue.

Par ailleurs, les contraintes subies par le doubleur sont correctement réparties à ladite portion de peau renforcée par l'intermédiaire des organes de consolidation. Les efforts de pelage subis par le doubleur sont ainsi sensiblement diminués, ce qui permet de ne pas avoir à réaliser de lâcher de plis pour celui-ci. On économise ainsi de la masse et l'encombrement est limité.

De plus, la longueur d'étalement de la surface du lâcher de plis du renfort dépend de la seule épaisseur dudit renfort et non pas de l'épaisseur cumulée renfort/doubleur. Une pente faible peut alors être respectée, ce qui, d'une part minimise les efforts de pelage et répartit correctement les contraintes, et d'autre part conduit à un lâcher de plis dont la masse et l'encombrement sont raisonnables.

Le doubleur est solidaire de ladite portion de peau renforcée par des techniques de fixation connues de l'homme du métier dans le domaine des matériaux composites, comme par exemple le collage, la co-cuisson ou la stratification.

Les organes de consolidation peuvent ainsi être disposés à des endroits déterminés, sans qu'il soit par exemple nécessaire de les disposer au niveau des coins de l'ouverture. En effet, les coins de l'ouverture sont de préférence renforcés par le doubleur solidaire de la portion de peau renforcée.

De préférence, le doubleur est assemblé à ladite portion de peau renforcée par co-cuisson. Ainsi, le doubleur présente une forme qui épouse sensiblement celle de la portion de peau renforcée, de sorte qu'il n'y a sensiblement pas d'espace vide entre le doubleur et la portion de peau renforcée. La résistance est ainsi homogène sur toute la surface de raccord entre le doubleur et la portion de peau renforcée.

Le renfort intégré peut comprendre une première portion d'épaisseur sensiblement constante, dont une première bordure définit au moins une partie du contour de l'ouverture. Il comprend alors une seconde portion de lâcher de plis, qui s'étend à partir de la première portion.

L'épaisseur maximale du renfort intégré peut par exemple être de l'ordre de 15mm, et de façon plus générale être comprise entre 5mm et 30mm.

L'épaisseur du doubleur est de préférence sensiblement constante. Elle peut être de l'ordre de 5mm, et de façon plus générale comprise entre 5mm et 30mm.

La peau du panneau, le renfort intégré et/ou le doubleur peuvent être réalisés par empilement de plis tissés ou unidirectionnels.

Dans le cas de l'empilement de plis unidirectionnels, les plis peuvent chacun être orientés suivant une direction formant un angle θ par rapport à l'axe circonférentiel du panneau. L'angle θ peut être choisi parmi les angles suivants 0°, 45°, 90°, -45°. On note que les axes longitudinal et circonférentiel du panneau sont définis de manière à être sensiblement parallèles, respectivement, aux axes longitudinal et circonférentiel du fuselage.

De préférence, les résines utilisées pour la peau de panneau, le renfort intégré et le doubleur sont de même nature, par exemple une résine thermodurcissable telle qu'une résine phénolique ou de type époxy.

Ainsi, dans le cas de l'assemblage du doubleur sur la portion de peau renforcée par co-cuisson, la résine du doubleur et celle de la portion de peau renforcée sont polymérisées l'une avec l'autre au niveau de la surface de raccord entre ces deux éléments, assurant ainsi la fixation du doubleur sur la portion de peau renforcée.

De préférence, les fibres utilisées pour la peau, le renfort intégré et le doubleur sont de même nature, par exemple des fibres de carbone, des fibres de verre ou des fibres aramides.

De préférence, la pente moyenne dudit lâcher de plis est sensiblement comprise entre 1/50 et 1/10.

La pente peut être de l'ordre de 1/20, de façon plus générale comprise entre 1/10 et 1/30, dans une direction sensiblement parallèle à l'axe longitudinal ou circonférentiel du panneau.

La pente du lâcher de plis peut être de l'ordre de 1/40, de façon plus générale comprise entre 1/30 et 1/50, dans une direction sensiblement oblique par rapport aux axes longitudinal et circonférentiel du panneau.

Avantageusement, la surface dudit doubleur est sensiblement inférieure à la surface de ladite portion de peau renforcée formant support pour ledit doubleur. Cela permet d'obtenir localement l'épaisseur nécessaire pour la résistance mécanique voulue. La surface du doubleur est de plus optimisée, ce qui limite la masse utilisée, ainsi que l'encombrement.

Ladite ouverture peut présenter une forme sensiblement rectangulaire, ledit doubleur étant alors disposé sensiblement aux coins de ladite ouverture.

Le contour de l'organe de consolidation est de préférence en contact, dans au moins une section transversale à l'axe longitudinal de l'organe de consolidation, avec la paroi du trou de logement dudit organe de consolidation.

Avantageusement, le contact continu est assuré sensiblement sur toute la longueur dudit organe de consolidation. Les organes de consolidation assurent alors une bonne transmission des contraintes entre le doubleur et le renfort intégré, dans la mesure où il n'y a pas de jeu entre le contour de l'organe de consolidation et la paroi du trou.

De préférence, chaque organe de consolidation s'étend sur toute l'épaisseur du doubleur, et sur toute l'épaisseur de la portion de peau renforcée du panneau. Chaque organe de consolidation peut être orienté suivant un axe sensiblement orthogonal, localement, à la surface de la peau du panneau.

Les organes de consolidation sont de préférence des organes à tige, et avantageusement des organes à tige expansible radialement par rapport à l'axe longitudinal de la tige. Par exemple, ces organes peuvent être du type rivet, vis et boulon, tige et anneau de sertissage, ou du type « lockbolt ».

L'invention a également pour objet une portion de fuselage d'aéronef comprenant au moins un panneau de fuselage selon l'une quelconque des caractéristiques qui viennent d'être définies et au moins un élément de structure de fuselage, lesdits organes de consolidation étant montés fixement sur ledit élément de structure du fuselage. Ainsi, l'élément de structure, par exemple des cadres, des lisses ou des linteaux, assure la reprise des efforts subis par le panneau dans sa partie renforcée et transmis par les organes de consolidation. La résistance mécanique du panneau est alors particulièrement améliorée.

L'invention a également pour objet un aéronef comportant au moins un panneau de fuselage selon l'une quelconque des caractéristiques précédentes et/ou au moins une portion de fuselage selon la caractéristique précédente.

L'invention a également pour objet un procédé de fabrication d'un panneau de fuselage en matériau composite selon l'une quelconque des caractéristiques précédentes, comportant les étapes suivantes :
- une étape de réalisation d'un empilement de plis de fibres pré-imprégnées comportant
   une pluralité de plis destinés à former une peau de panneau, comprenant un premier ensemble de plis et un second ensemble de plis,
   un ou plusieurs plis interposés entre le premier et le second ensembles de plis, et destinés à former ledit renfort intégré, les plis du renfort intégré et ceux de la peau définissant ensemble une portion de peau renforcée, et
   un ou plusieurs plis disposés sur les plis destinés à former ladite portion de peau renforcée, et destinés à former ledit doubleur; puis
- une étape de consolidation dudit empilement ; ledit procédé comprenant également les étapes :
- de pose desdits organes de consolidation ; et
- de détourage, pour former ladite ouverture.

Les premier et second ensembles de plis peuvent comprendre chacun un ou plusieurs plis.

De préférence, l'étape de pose des organes de consolidation comprend une sous-étape pendant laquelle au moins une partie dudit organe de consolidation est expansée radialement à son axe longitudinal, de manière à assurer le contact continu, dans au moins une section transversale à son axe longitudinal, du contour de l'organe de consolidation avec la paroi du trou de logement dudit organe de consolidation.

Le procédé peut comprendre, en outre, une étape de fixation desdits organes de consolidation à au moins un élément de structure du fuselage. Les organes de consolidation assurent alors la fonction supplémentaire de fixation du panneau sur ledit élément de structure.

Avantageusement, tous les organes de consolidation sont fixés à au moins un élément de structure du fuselage.

D'autres avantages et caractéristiques de l'invention apparaîtront dans la description détaillée non limitative ci-dessous.

### BRÈVE DESCRIPTION DES DESSINS

On décrira à présent, à titre d'exemples non limitatifs, des modes de réalisation de l'invention, en se référant aux dessins annexés, dans lesquels :
La figure 1, déjà décrite, est une vue en perspective et de côté qui représente très schématiquement les parties avant et centrale d'un aéronef ;
La figure 2, déjà décrite, est une vue de face d'un panneau de fuselage comportant une ouverture destinée à recevoir un encadrement de porte ;
La figure 3, déjà décrite, est une vue en perspective agrandie d'une partie de la figure 2, le panneau de fuselage comportant un renfort intégré selon l'art antérieur ;
La figure 4, déjà décrite, est une vue en coupe du panneau de fuselage comportant une portion de peau renforcée, représentée suivant l'axe A-A de la figure 3 ;

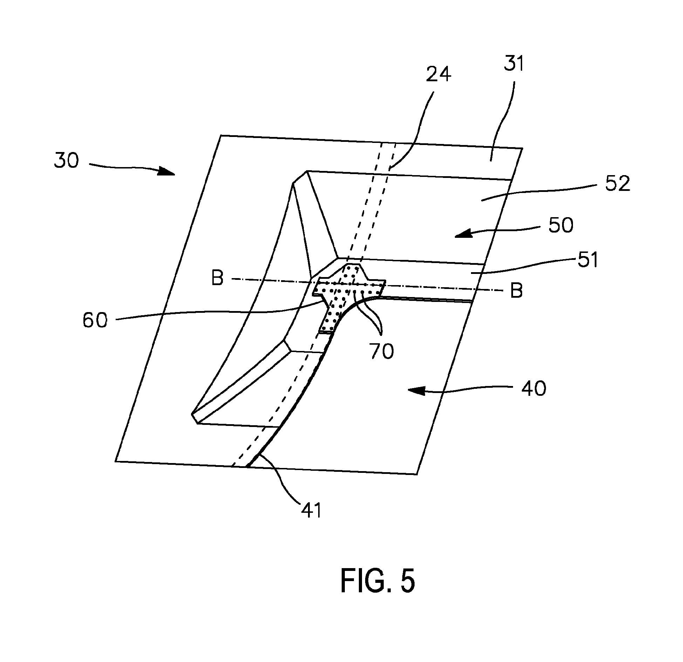

La figure 5 est une vue en perspective agrandie d'une partie de la figure 2, le panneau de fuselage renforcé et muni d'un doubleur selon le mode de réalisation préféré de l'invention ; et

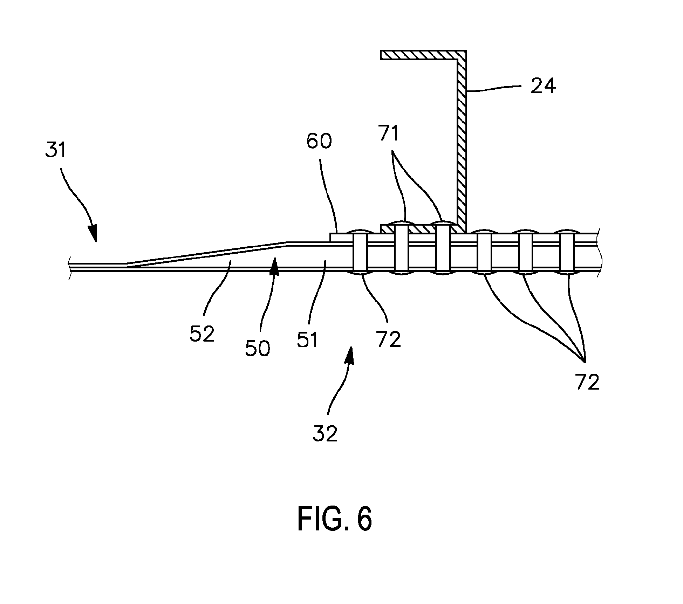

La figure 6 est une vue en coupe du panneau de fuselage renforcé et muni du doubleur, représentée suivant l'axe B-B de la figure 5.

### EXPOSÉ DÉTAILLÉ D'UN MODE DE RÉALISATION PREFERE

Sur la figure 5, on a représenté en perspective une partie agrandie d'un panneau 30 de fuselage en matériau composite tel que représenté sur la figure 2. Le panneau 30 est muni d'un doubleur 60 selon le mode de réalisation préféré de l'invention.

Le panneau 30 s'étend suivant des axes longitudinal et circonférentiel sensiblement parallèles, respectivement, aux axes longitudinal et circonférentiel du fuselage 20.

Le panneau 30 en matériau composite comprend une peau 31 de base formée d'un empilement consolidé de plis de tissus ou de nappes unidirectionnelles de fibres pré-imprégnées d'une résine appropriée.

Au moins une ouverture 40 est prévue dans la peau 31 du panneau 30, pour recevoir par exemple une porte passager, une trappe, ou une fenêtre.

L'ouverture 40 peut présenter différentes formes, notamment sensiblement rectangulaire ou carrée, ou ovale. On considère que la forme carrée est un cas particulier de la forme plus générale rectangulaire. Dans le cas d'une forme rectangulaire, les coins peuvent être sensiblement anguleux ou arrondis.

La peau 31 du panneau 30 comprend une portion de peau 32 renforcée par un renfort intégré 50 en matériau composite. Celui-ci est intercalé entre un premier empilement secondaire consolidé 31A de la peau, et un second empilement secondaire consolidé 31B de la peau, comme décrit précédemment en référence à la figure 4.

Le renfort intégré 50 s'étend, de préférence, sur la face intérieure du panneau 30. Le terme intérieur est à comprendre dans le sens d'un rapprochement radial de l'axe longitudinal du fuselage 20.

Le renfort intégré 50 comporte, dans ce mode de réalisation de l'invention, une première portion 51 dont l'épaisseur est sensiblement constante, définissant au moins une partie du contour 41 de l'ouverture 40. Une seconde portion 52, dite de lâcher de plis, s'étend à partir de la première portion 51 et présente une épaisseur qui diminue progressivement, à mesure que l'on s'éloigne de la première portion 51. La seconde portion 52 peut être disposée en biseau ou en étages ou gradins. Ainsi, le renfort intégré 50 présente une surface déterminée.

Le panneau 30 est donc localement renforcé et présente une épaisseur maximale dans la partie correspondant à la première portion 51 du renfort intégré 50.

Il est à noter que la première portion 51 peut ne pas être présente. Aussi, le renfort intégré 40 comprend un lâcher de plis 52 disposé de manière à définir au moins une partie du contour 41 de l'ouverture 40. L'épaisseur maximale du lâcher de plis est alors située au niveau du contour 41 de l'ouverture 40.

Dans le cas d'une ouverture 40 de forme sensiblement rectangulaire, le renfort intégré 50 peut être disposé sur la totalité du contour 41 de l'ouverture 40. Il peut également être disposé sur au moins une partie du contour, comme notamment la partie supérieure (figure 5) et/ou la partie inférieure du contour 41.

La portion de lâcher de plis 52 s'étend sur la peau 31 sur une surface dont la longueur d'étalement dépend d'une part de l'épaisseur de la première portion 51 du renfort intégré 50 et d'autre part de la pente du lâcher de plis.

La pente moyenne dudit lâcher de plis est sensiblement comprise entre 1/40 et 1/20. La pente est de préférence de l'ordre de 1/20 dans une direction sensiblement parallèle à l'axe longitudinal ou circonférentiel du panneau. Elle est de préférence de l'ordre de 1/40 dans une direction sensiblement oblique par rapport aux axes longitudinal et circonférentiel du panneau.

Comme le montre la figure 5, un doubleur 60 en matériau composite, solidaire de la portion de peau renforcée 32 et superposé à celle-ci, est prévu sur le panneau 30. Plus précisément, le doubleur 60 est monté fixement sur la portion de peau de renfort 32.

De préférence, le doubleur 60 est assemblé à ladite portion de peau renforcée 32 par co-cuisson, comme décrit plus loin.

La forme du doubleur 60 correspond alors sensiblement à celle de la portion de peau renforcée 32, de sorte qu'il n'y a sensiblement pas d'espace vide entre le doubleur 60 et la portion de peau renforcée 32.

Le doubleur 60 est de préférence superposé à la première portion 51 du renfort intégré 50, définissant avec ce dernier au moins une partie du contour 41 de l'ouverture 40.

Bien entendu, dans une variante de réalisation non représentée où la première portion 51 du renfort intégré 50 n'est pas présente, le doubleur 60 est superposé à la portion de lâcher de plis 52 de manière à définir avec le renfort intégré 50 au moins une partie du contour 41 de l'ouverture 40.

De préférence, l'épaisseur du doubleur est sensiblement constante.

Il présente avantageusement une surface inférieure à celle du renfort intégré 50 et est préférentiellement situé, dans l'exemple représenté sur la figure 5, au niveau des coins arrondis de l'ouverture 40. En effet, les zones de coins de l'ouverture 40 sont le lieu d'une concentration des contraintes particulièrement élevée. Aussi, la disposition du doubleur dans ces zones procure la résistance mécanique nécessaire.

Pour assurer le transfert des contraintes entre le doubleur 60 et la portion de peau renforcée 32, des organes de consolidation 70 sont prévus qui traversent au moins en partie le doubleur 60 et au moins en partie la portion de peau renforcée 32.

Ils peuvent également participer à la fixation du doubleur 60 sur la portion de peau renforcée 32.

Les organes de consolidation 70 sont de préférence des organes à tige, et avantageusement des organes à tige expansible radialement par rapport à l'axe longitudinal de la tige. Par exemple, ces organes peuvent être du type rivet, vis et boulon, tige et anneau de sertissage, ou du type « lockbolt ».

Les organes de consolidation 70 sont avantageusement orientés suivant un axe sensiblement orthogonal, localement, à la surface de la peau 31.

De préférence, l'organe de consolidation comprend un corps d'organe qui occupe un trou de logement de l'organe de consolidation. Le corps d'organe peut traverser le doubleur et la portion de peau renforcée sur toute l'épaisseur de ces éléments.

Avantageusement, le contour du corps d'organe est en contact continu avec la paroi du trou, sur toute la hauteur de celui-ci.

Ainsi les contraintes sont transmises du doubleur 60 à la portion de peau renforcée 32, il n'est donc pas nécessaire de prévoir un lâcher de plis pour le doubleur 60. Un saut d'épaisseur est alors possible entre le doubleur 60 et la portion de peau renforcée 32, comme l'illustre la figure 6. La figure 6 montre en coupe longitudinale, suivant l'axe B-B de la figure 5, une partie du panneau 30 renforcé muni du doubleur 60.

Dans un mode de réalisation de l'invention, une portion de fuselage comporte au moins un panneau 30, ainsi renforcé par le renfort intégré 50 et le doubleur 60, monté fixement sur des éléments de structure du fuselage.

Ces éléments de structure peuvent être des cadres, des lisses, des linteaux ou des longerons.

La figure 5 montre en traits pointillés un cadre 24 sur lequel est monté fixement le panneau 30. Les organes de consolidation participent alors au transfert des contraintes du panneau 30 au cadre 24.

Ainsi, le cadre 24 participe à la résistance mécanique apportée par le renfort intégré 50 et le doubleur 60, dans la mesure où les efforts subis par ces deux éléments sont également transmis dans le cadre 24 par les organes de consolidation 70.

Avantageusement, ces organes de consolidation 70 sont disposés de manière à être montés fixement sur au moins un élément de structure. Sur la figure 5, ceux-ci sont montés sur le cadre 24 et/ou sur un linteau (non représenté) orienté parallèlement à l'axe longitudinal du panneau.

La figure 6 montre en coupe des organes de consolidation 71 traversant la portion de peau renforcée 32 et le doubleur 60, et montés fixement sur un cadre de structure 24. Les autres organes de consolidation 72 peuvent traverser la portion de peau renforcée 32 et le doubleur 60. De préférence, certains organes de consolidation sont montés fixement sur un linteau de structure (non représenté) disposé sensiblement perpendiculairement au cadre 24.

La peau 31, le renfort intégré 50, et le doubleur 60 peuvent être formés d'un empilement de plis de tissus ou de nappes unidirectionnelles de fibres pré-imprégnées d'une résine appropriée.

De préférence, les fibres et la résine de ces trois éléments sont de même nature.

Elles sont choisies selon l'application envisagée parmi les fibres et les résines utilisées habituellement dans le domaine des matériaux composites. Ainsi, les fibres peuvent être des fibres de carbone, des fibres de verre ou des fibres aramides et la résine une résine thermodurcissable telle qu'une résine phénolique ou de type époxy.

Dans le mode de réalisation préféré représenté sur la figure 5, la peau 31 a une épaisseur de l'ordre de 5mm, le renfort intégré 50 présente une épaisseur maximale de l'ordre de 15mm, et le doubleur 60 une épaisseur de l'ordre de 5mm.

Bien entendu, l'épaisseur maximale du renfort intégré 50 et celle du doubleur 60 peuvent être différentes, selon les besoins de renforcement du panneau 30.

L'optimisation des épaisseurs peut être obtenue par simulation numérique des écoulements des contraintes dans le panneau 30 ainsi renforcé.

Le panneau 30 selon l'invention peut être réalisé par un procédé de fabrication comportant les étapes suivantes :
- une étape de réalisation d'un empilement de plis de fibres pré-imprégnées comportant
   une pluralité de plis destinés à former une peau 31 de panneau, comprenant un premier ensemble de plis 31A et un second ensemble de plis 31B,
   un ou plusieurs plis interposés entre le premier et le second ensembles de plis 31A 31B, et destinés à former ledit renfort intégré 50, les plis du renfort
   intégré 50 et ceux de la peau 31 définissant ensemble une portion de peau renforcée 32, et
   un ou plusieurs plis disposés sur les plis destinés à former ladite portion de peau renforcée 32, et destinés à former ledit doubleur 60 ; puis
- une étape de consolidation dudit empilement ; ledit procédé comprenant également les étapes :
- de pose desdits organes de consolidation 70 ; et
- de détourage, pour former ladite ouverture 40.

Les premier et second ensembles 31A, 31B de plis peuvent comprendre chacun un ou plusieurs plis.

Avantageusement, lors de l'étape de pose des organes de consolidation 70, une sous-étape est prévue pendant laquelle au moins une partie dudit organe de consolidation 70 est expansée radialement par rapport à son axe longitudinal. Cela permet d'assurer le contact continu, dans au moins une section transversale à son axe longitudinal, du contour de l'organe de consolidation 70 avec la paroi du trou de logement dudit organe de consolidation 70.

## Revendications

1. Panneau (30) de fuselage en matériau composite comportant une peau (31) présentant une ouverture (40) dont au moins une partie du contour (41) est renforcée par un renfort intégré (50) en matériau composite, définissant une portion de peau renforcée (32), ledit renfort intégré (50) définissant au moins une partie du contour (41) de ladite ouverture (40) et comportant un lâcher de plis (52),
**caractérisé en ce que** ledit panneau (30) de fuselage comporte au moins un doubleur (60) en matériau composite solidaire et superposé à ladite portion de peau renforcée (32), participant au moins partiellement à la définition du contour (41) de l'ouverture (40), ledit panneau (30) comportant en outre des organes de consolidation (70) traversant chacun au moins en partie ledit doubleur (60) et au moins en partie ladite portion de peau renforcée (32).

2. Panneau (30) de fuselage selon la revendication 1, **caractérisé en ce que** ledit doubleur (60) est assemblé par co-cuisson à ladite portion de peau renforcée (32).

3. Panneau (30) de fuselage selon la revendication 1 ou 2, **caractérisé en ce que** la surface dudit doubleur (60) est sensiblement inférieure à la surface de ladite portion de peau renforcée (32) formant support pour ledit doubleur (60).

4. Panneau (30) de fuselage selon l'une quelconque des revendications 1 à 3, **caractérisé en ce que** ledit doubleur (60) présente une épaisseur sensiblement constante.

5. Panneau (30) de fuselage selon l'une quelconque des revendications 1 à 4, **caractérisé en ce que**, dans au moins une section transversale à l'axe longitudinal de l'organe de consolidation (70), le contour de l'organe de consolidation (70) est en contact continu avec la paroi du trou de logement dudit organe de consolidation (70).

6. Panneau (30) de fuselage selon la revendication 5, **caractérisé en ce que** le contact continu est assuré sensiblement sur toute la longueur dudit organe de consolidation (70).

7. Portion de fuselage d'aéronef, **caractérisé en ce qu'**il comprend au moins un panneau (30) de fuselage selon l'une quelconque des revendications 1 à 6, ainsi qu'au moins un élément de structure du fuselage, lesdits organes de consolidation (70) étant montés fixement sur ledit élément de structure du fuselage.

8. Aéronef comportant au moins un panneau (30) de fuselage selon l'une quelconque des revendications 1 à 6 et/ou au moins une portion de fuselage selon la revendication 7.

9. Procédé de fabrication d'un panneau (30) de fuselage en matériau composite selon l'une quelconque des revendications 1 à 6, comportant les étapes suivantes :
- une étape de réalisation d'un empilement de plis de fibres pré-imprégnées comportant
une pluralité de plis destinés à former une peau (31) de panneau, comprenant un premier ensemble de plis (31A) et un second ensemble de plis (31B),
un ou plusieurs plis interposés entre le premier et le second ensembles de plis (31A,31B), et destinés à former ledit renfort intégré (50), les plis du renfort intégré (50) et ceux de la peau (31) définissant ensemble une portion de peau renforcée (32), et
un ou plusieurs plis disposés sur les plis destinés à former ladite portion de peau renforcée (32), et destinés à former ledit doubleur (60) ; puis
- une étape de consolidation dudit empilement ; ledit procédé comprenant également les étapes :
- de pose desdits organes de consolidation (70) ;
et
- de détourage, pour former ladite ouverture (40).

10. Procédé de fabrication selon la revendication 9, **caractérisé en ce que** l'étape de pose des organes de consolidation (70) comprend une sous-étape pendant laquelle au moins une partie dudit organe de consolidation (70) est expansée radialement par rapport à son axe longitudinal, de manière à assurer le contact continu, dans au moins une section transversale à son axe longitudinal, du contour de l'organe de consolidation (70) avec la paroi du trou de logement dudit organe de consolidation (70).

## Patentansprüche

1. Flugzeugrumpfplatte (30) aus Verbundwerkstoff mit einer Haut (31) und einer Öffnung (40), von deren Kontur (41) zumindest ein Teil durch eine integrierte Verstärkung (50) aus Verbundwerkstoff verstärkt ist, die ein Teilstück mit verstärkter Haut (32) definiert, wobei die integrierte Verstärkung (50) zumindest einen Teil der Kontur (41) der genannten Öffnung (40) definiert und dabei eine Verstärkung des Typs "ply drop-off" (lâcher de plis) (52) umfasst,
**dadurch gekennzeichnet, dass** die genannte Flugzeugrumpfplatte (30) wenigs-tens einen Verdoppler (60) aus Verbundwerkstoff umfasst, der auf dem genannten Teilstück mit verstärkter Haut (32) befestigt ist und wenigstens teilweise an der Definition der Kontur (41) der Öffnung (40) beteiligt ist, wobei die genannte Platte (30) außerdem Konsolidierungsbauteile (70) umfasst, von denen jedes wenigstens teilweise den genannten Doppler (60) und wenigstens teilweise das genannte Teilstück mit verstärkter Haut (32) durchquert.

2. Flugzeugrumpfplatte (30) nach Anspruch 1, **dadurch gekennzeichnet, dass** der genannte Verdoppler (60) durch Ko-Härtung mit dem genannten Teilstück mit verstärkter Haut (32) zusammengebaut ist.

3. Flugzeugrumpfplatte (30) nach Anspruch 1 oder 2, **dadurch gekennzeichnet, dass** die Oberfläche des genannten Verdopplers (60) wesentlich kleiner ist als die Fläche des genannten Teilstücks mit verstärkter Haut (32), die dem genannten Verdopplers (60) als Träger dient.

4. Flugzeugrumpfplatte (30) nach einem der Ansprüche 1 bis 3, **dadurch gekennzeichnet, dass** der genannte Verdoppler (60) eine im Wesentliche konstante Dicke aufweist.

5. Flugzeugrumpfplatte (30) nach einem der Ansprüche 1 bis 4, **dadurch gekennzeichnet, dass** die Kontur des Konsolidierungsbauteils (70) in wenigstens einem zur Längsachse des Konsolidierungsbauteils (70) transversalen Querschnitts kontinuierlichen Kontakt mit der Wand des Loches hat, das dem genannten Konsolidierungsbau-teil (70) als Sitz dient.

6. Flugzeugrumpfplatte (30) nach Anspruch 5, **dadurch gekennzeichnet, dass** der kontinuierliche Kontakt im Wesentlichen über die gesamte Länge des genannten Konsolidierungsbauteils (70) gewährleistet ist.

7. Flugzeugrumpf-Teilstück, **dadurch gekennzeichnet, dass** es wenigs-tens eine Flugzeugrumpfplatte (30) nach einem der Ansprüche 1 bis 6 sowie wenigstens ein Flugzeugrumpf-Strukturelement umfasst, wobei die Konsolidierungsbauteile (70) fest in das genannte Flugzeugrumpf-Strukturelement montiert sind.

8. Flugzeug mit wenigstens einer Flugzeugrumpfplatte (30) nach einem der Ansprüche 1 bis 6 und/oder wenigstens einem Flugzeugrumpf-Teilstück nach Anspruch 7.

9. Verfahren zur Herstellung einer Flugzeugrumpfplatte (30) aus Verbundwerkstoff nach einem der Ansprüche 1 bis 6, die folgenden Schritte umfassend :
- einen Schritt zur Realisierung eines Stapels vorimprägnierter Faserlagen, umfassend
eine Vielzahl Lagen, dazu bestimmt, eine Plattenhaut (31) mit einer ersten Lageneinheit (31A) und einer zweiten Lageneinheit (31 B) zu bilden,
eine oder mehrere Zwischenlagen, eingefügt zwischen der ersten und der zweiten Lageneinheit (31A, 31 B) und dazu bestimmt, die genannte integrierte Verstärkung (50) zu bilden, wobei die Lagen der integrierten Verstärkung (50) und diejenigen der Haut (31) zusammen ein Teilstück der verstärken Haut (32) definieren, und
eine oder mehrere Lagen, angeordnet auf den Lagen, die dazu bestimmt sind, das genannte Teilsstück mit verstärkter Haut (32) zu bilden, und dazu bestimmt, den genannten Verdoppler (60) zu bilden ; dann
- einen Schritt zur Konsolidierung des genannten Stapels ;
wobei das genannte Verfahren auch folgende Schritte umfasst ;
- Einsetzen der genannten Konsolidierungsbauteile (70) ;
- Ausschneiden der genannten Öffnung (40) .

10. Herstellungsverfahren nach Anspruch 9, **dadurch gekennzeichnet, dass** der Schritt zum Einsetzen der Konsolidierungsbauteile (70) einen Teilschritt umfasst, während dem wenigstens ein Teil des genannten Konsolidierungsbauteils (70) in mindestens einem zu seiner Längsachse transversalen Querschnitt in Bezug auf seine Längsachse radial ausgedehnt wird, um den kontinuierlichen Kontakt des Umfangs des Konsolidierungsbauteils (70) mit der Wand des Loches zu gewährleisten, das dem genannten Konsolidierungsbauteil (70) als Sitz dient.

## Claims

1. Fuselage panel (30) made of composite material comprising a skin (31) having an opening (40), at least part of the contour (41) of which is reinforced by an integrated reinforcement (50) made of composite material, defining a reinforced skin portion (32), said integrated reinforcement (50) defining at least part of the contour (41) of said opening (40) and comprising a ply drop-off (52),
**characterised in that** said fuselage panel (30) comprises at least one liner (60) made of composite material which is attached to and superposed on said reinforced skin portion (32) and participates at least partially in defining the contour (41) of the opening (40), said panel (30) additionally comprising consolidating members (70), each passing at least partially through said liner (60) and at least partially through said reinforced skin portion (32).

2. Fuselage panel (30) according to claim 1, **characterised in that** said liner (60) is assembled by co-firing to said reinforced skin portion (32).

3. Fuselage panel (30) according to claim 1 or 2, **characterised in that** the surface area of said liner (60) is substantially smaller than the surface area of said reinforced skin portion (32) forming a support for said liner (60).

4. Fuselage panel (30) according to any one of claims 1 to 3, **characterised in that** said liner (60) has a substantially constant thickness.

5. Fuselage panel (30) according to any one of claims 1 to 4, **characterised in that**, in at least one section transverse to the longitudinal axis of the consolidating member (70), the contour of the consolidating member (70) is in continuous contact with the wall of the hole for housing said consolidating member (70).

6. Fuselage panel (30) according to claim 5, **characterised in that** the continuous contact is achieved substantially over the entire length of said consolidating member (70).

7. Aircraft fuselage portion, **characterised in that** it comprises at least one fuselage panel (30) according to any one of claims 1 to 6 and at least one structural element of the fuselage, said consolidating members (70) being mounted fixedly on said structural element of the fuselage.

8. Aircraft comprising at least one fuselage panel (30) according to any one of claims 1 to 6 and/or at least one fuselage portion according to claim 7.

9. Method of manufacturing a fuselage panel (30) made of composite material according to any one of claims 1 to 6, comprising the following steps:
- a step of creating a stack of preimpregnated fibre plies, comprising
a plurality of plies intended to form a panel skin (31), comprising a first set of plies (31A) and a second set of plies (31B),
one or more plies interposed between the first and second sets of plies (31A, 31B) and intended to form said integrated reinforcement (50), the plies of the integrated reinforcement (50) and those of the skin (31) defining together a reinforced skin portion (32), and
one or more plies arranged on the plies intended to form said reinforced skin portion (32), and intended to form said liner (60); then
- a step of consolidating said stack;
said method also comprising the steps of:
- installing said consolidating members (70); and
- trimming so as to form said opening (40).

10. Manufacturing method according to claim 9, **characterised in that** the step of installing the consolidating members (70) comprises a sub-step during which at least part of said consolidating member (70) is expanded radially with respect to its longitudinal axis so as to achieve the continuous contact, in at least one section transverse to its longitudinal axis, of the contour of the consolidating member (70) with the wall of the hole for housing said consolidating member (70).
